Europäisches Patentamt

European Patent Office

Office européen des brevets

(19)

(11) Veröffentlichungsnummer: **0 026 452**

**A2**

(12) # EUROPÄISCHE PATENTANMELDUNG

(21) Anmeldenummer: 80105751.4

(22) Anmeldetag: 24.09.80

(51) Int. Cl.³: **G 03 G 15/052**
**G 06 K 15/14, B 41 J 3/18**

(30) Priorität: 26.09.79 DE 2938945

(43) Veröffentlichungstag der Anmeldung:
**08.04.81 Patentblatt 81/14**

(84) Benannte Vertragsstaaten:
**AT BE CH FR GB IT LI LU NL SE**

(71) Anmelder: **SIEMENS AKTIENGESELLSCHAFT Berlin und München**
**Postfach 22 02 61**
**D-8000 München 22(DE)**

(72) Erfinder: **Goldmann, Gerd, Dr., Dipl-Phys.**
**Sudermannallee 16**
**D-8000 Munchen 83(DE)**

(72) Erfinder: **Knott, Joseph, Ing.grad.**
**Unteranger 3**
**D-8132 Unterzeismering(DE)**

(54) **Vorrichtung zur Erzeugung von Ladungsbildern auf einem fotoleitenden Bildträger.**

(57) Bei nach dem elektrofotografischem Prinzip arbeitenden Druckern müssen auf einem Bildempfangsmaterial, z.B. einer Fotoleitertrommel, Ladungsbilder der zu druckenden Zeichen erzeugt werden. Dies erfolgt mit Hilfe eines Schreibkopfes (56), der entsprechend der zu drukkenden Zeichen Licht aussendet und damit Bereiche der Oberfläche des Bildträgers (52) entlädt. Diese Ladungsbilder werden anschließend mit Hilfe von Toner entwickelt und die dadurch entstehenden Tonerbilder direkt auf dem Bildträger oder nach Umdruck auf ein Bildempfangsmaterial fixiert. Ein besonders einfach aufgebauter Schreibkopf besteht aus mindestens einem Kamm aus nebeneinander liegenden lichtemittierenden Dioden (LED). Der Kamm ist in Richtung der auf dem Bildträger (52) zu erzeugenden Zeilen von Ladungsbildern angeordnet und hat eine Breite, die der Schreibbreite auf dem Bildträger entspricht. Die Leuchtflächen der Dioden sind dabei an der Vorderseite des Schreibkopfes angeordnet, so daß die von den Dioden ausgehenden Lichtstrahlen ohne Zwischenschaltung von die Lichtstrahlen beeinflussenden oder führenden optischen Mittel direkt dem Bildträger (52) zugeführt werden.

./...

FIG 1

SIEMENS AKTIENGESELLSCHAFT      Unser Zeichen
BERLIN UND MÜNCHEN      VPA 79 P 2 0 6 5 EUR

Vorrichtung zur Erzeugung von Ladungsbildern auf einem
fotoleitenden Bildträger

Die Erfindung bezieht sich auf eine Vorrichtung zur Erzeugung von Ladungsbildern auf einem fotoleitenden Bildträger mit Hilfe eines lichtaussendenden Schreibkopfes, bei der der Bildträger zuvor gleichmäßig aufgeladen worden ist, bei der die Ladungsbilder mit Hilfe von Toner entwickelt werden und die dadurch entstehenden Tonerbilder direkt auf dem Bildträger oder nach Umdruck auf ein Bildempfangsmaterial fixiert werden.

Bei nichtmechanischen Schnelldruckern, die nach dem elektrofotografischen Prinzip arbeiten, werden zur Zeichenerzeugung auf einem Fotoleiter elektrostatische Ladungsbilder aufgebracht. Diese werden anschließend durch Toner sichtbar gemacht und danach dauerhaft fixiert. Zur Erzeugung der Ladungsbilder wird der Fotoleiter mit einer geeigneten Koronavorrichtung ganzflächig aufgeladen und durch partielles Belichten ent-

Il 1 Stl / 25.9.1979

sprechend der gewünschten Information so entladen, daß ein Ladungsbild der Information entsteht. Derartige nichtmechanische Schnelldrucker sind bekannt, sie ergeben sich z.B. aus der Literaturstelle "Applied Optics, Vol 17, Nr. 6, 15. März 1978, Seiten 878 bis 884".

Die Erzeugung der Ladungsbilder wurde bisher z.B. mit Hilfe eines Schreibkopfes erzeugt, bei dem ein Laser verwendet wird. Der Laserstrahl wird mit Hilfe von Ablenkern, wie z.B. Polygonspiegel, elektroakustische Ablenker zu den gewünschten Stellen des Fotoleiters geführt. Derartige Schreibköpfe sind sehr teuer und darum für kleinere und billigere Geräte nicht geeignet.

Die der Erfindung zugrundeliegende Aufgabe besteht darin, eine Vorrichtung zur Erzeugung von Ladungsbildern auf einem fotoleitenden Bildträger anzugeben, bei der der verwendete Schreibkopf einfach aufgebaut und daher sehr billig ist. Diese Aufgabe wird dadurch gelöst, daß der Schreibkopf aus mindestens einem Kamm aus lichtemmittierenden Dioden (LED-Kamm) besteht, der in Richtung der auf dem Bildträger aufzubringenden Zeilen von Ladungsbildern angeordnet ist und eine Breite hat, die der Schreibbreite auf dem Bildträger entspricht, daß zwischen Schreibkopf und Bildträger keine die von dem Schreibkopf ausgehenden Lichtstrahlen beeinflussenden oder führenden optischen Mittel angeordnet sind, und daß eine Steuerschaltung vorgesehen ist, die die lichtemittierenden Dioden entsprechend der zu schreibenden Zeichen ansteuert.

Die lichtemittierenden Dioden werden in folgenden mit LED abgekürzt bezeichnet.

Zur Erzeugung von Rasterdruck ist es zweckmäßig, daß der Schreibkopf aus in Zeilenrichtung nebeneinander liegenden LEDs besteht, die in der Anzahl der Mikrospalten der Zeichenmatrixfelder entlang einer Druckzeile entsprechen.

Der Schreibkopf kann aus einem in Zeilenrichtung liegenden LED-Kamm bestehen. Es ist aber auch möglich, daß der Schreibkopf aus mehreren LED-Kämmen mit gröberer Teilung als der Teilung der Mikrospalten besteht. Dann sind die einzelnen LED-Kämme in Bewegungsrichtung des Bildträgers hintereinander, in Zeilenrichtung des Bildträgers dagegen um Bruchteile der Teilung versetzt zueinander angeordnet.

Vorteilhaft ist es, daß der Schreibkopf an der Lichtaustrittsstelle der LEDs mit einer Lochmaske versehen ist, durch die die Größe der den einzelnen LEDs zugeordneten Leuchtfläche festgelegt werden kann. Damit wird erreicht, daß die wirksamen Leuchtflächen der einzelnen LEDs in definierter Weise kleiner ist als die der eigentlichen LEDs.

Zur Vereinfachung der Ansteuerung kann in einer Anschlußverdrahtung durch Matrixbildung die Anzahl der Leitungen reduziert werden. Die Anschlußverdrahtung besteht vorzugsweise aus einem doppelseitig kupferkaschierten Polyamidfilm, auf dem die Zuleitungen zu den LEDs auf der einen Seite verlaufen, während die Verknüpfung entsprechender Bahnen auf der Rückseite erfolgt und beide Seiten an den entsprechenden Punkten durch Durchkontaktieren elektrisch miteinander verbunden sind.

Dadurch ergibt sich eine Aufteilung der LEDs in Blöcke.

Dabei werden die Anoden der LEDs jedes Blockes über ein erstes Schaltelement mit einem ersten Betriebspotential verbunden. Die Kathode je eines LEDs pro Block wird mit der Kathode jeweils eines entsprechenden LEDs in den anderen Blöcken verbunden und über ein zweites Schaltelement an ein zweites Betriebspotential angeschlossen.

Um eine Verschmutzung der LEDs zu verhindern, kann am Schreibkopf vor der Lichtaustrittstelle der LEDs eine auswechselbare Transparentfolie angeordnet werden. Es ist aber auch vorteilhaft, statt der transparenten Folie ein Band aus einer transparenten Folie vorzusehen, das zwischen Bildträger und Schreibkopf vorbeigeführt wird und bei Verschmutzung weitertransportiert werden kann.

Wird als Bildträger ein elektrofotografisches Papier verwendet, dann kann der Schreibkopf direkt auf dem Papier schleifen. Dies hat den Vorteil, daß die Leuchtflächen durch das schleifende Papier permanent von Staub usw. gereinigt werden.

Anhand von Ausführungsbeispielen wird die Erfindung weiter erläutert. Es zeigen:

FIG 1    den prinzipiellen Aufbau eines Schreibkopfes,

FIG 2    eine Ansteuerschaltung für den Schreibkopf,

FIG 3    die Anordnung des Schreibkopfes in einem elektrofotografischen Druckgerät.

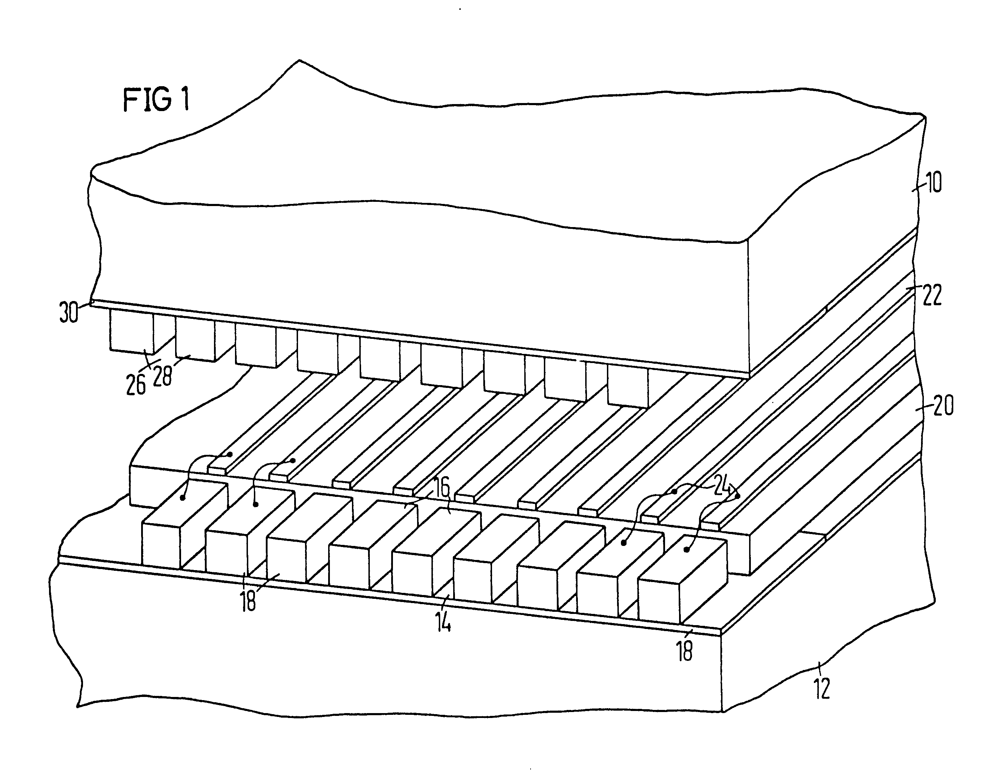

Der prinzipielle Aufbau des Schreibkopfes mit zwei versetzt zueinander angeordneten LED-Kämmen ergibt sich aus FIG 1. Dabei wird die Funktion der LEDs und deren Anordnung in Kämmen als bekannt vorausgesetzt (z.B. DE-OS 26 41 540). Der Schreibkopf besitzt zwei Montageträger 10, 12, von denen nur die Vorderseite gezeigt ist. Auf der Oberseite des Montageträgers 12 ist ein Kamm 14 von LEDs 16 angeordnet. Die LEDs 16 haben an der Vorderseite Leuchtflächen 18. Sie sind auf einer gemeinsamen Anodenplatte 18 angeordnet, über die ihnen das Anodenpotential zugeführt wird. Der nähere Aufbau dieses Bereiches ergibt sich aus der DE-OS 26 41 540.

Auf dem Montageträger 12 befindet sich hinter dem Kamm 14 ein Polyamidfilm 20, auf dessen einer Seite Zuleitungen 22 zu den einzelnen LEDs 16 angeordnet sind. Die Verbindung zwischen den einzelnen LEDs 16, und zwar deren Kathode mit den zugeordneten Zuleitungen 22 erfolgt z.B. über Kontaktdrähte 24. Andere Kontaktierungen ergeben sich aus der zitierten Offenlegungsschrift. Unterhalb des Polyamidfilmes 20 sind Verknüpfungsleitungen angeordnet, durch die die Verbindungen zwischen einzelnen Zuleitungen 22 durchgeführt werden. Dazu sind die Verknüpfungsleitungen durch den Polyamidfilm 20 hindurch mit den Zuleitungen kontaktiert. Die Verknüpfungsleitungen sind in FIG 1 nicht gezeigt.

Der Aufbau des zweiten Kammes auf dem Montageträger 10 ist in entsprechender Weise durchgeführt. Hier ist ebenfalls ein Kamm 26 aus nebeneinander angeordneten Leuchtdioden 28 vorgesehen, die über eine gemeinsame Anodenplatte 30 mit dem Montageträger 10 verbunden sind. Der ebenfalls vorgesehene Polyamidfilm mit den Zuleitungen und Verknüpfungsleitungen kann in FIG 1 nicht erkannt werden.

Im Schreibkopf kann jeweils nur ein einziger Kamm 14 vorgesehen werden. Dieser Kamm besteht dann aus nebeneinander liegenden LEDs 16, wobei bei Rasterdruck für jede Mikrospalte der aus Mikrospalten und Mikrozeilen bestehenden über die Schreibbreite auf dem Bildträger vorgesehenen Zeichenraster, je ein LED 16 verwendet wird. Damit kann mit Hilfe eines derartigen Kammes gleichzeitig eine Mikrozeile von Ladungsbildpunkten auf einem Bildträger erzeugt werden.

Um die Rasterteilung zu verbessern, ist es aber auch möglich, in Bewegungsrichtung des Bildträgers z.B. zwei in Zeilenrichtung versetzt zueinander angeordnete Kämme zu verwenden. Dieser Fall ist in FIG 1 dargestellt. Dabei ist es zweckmäßig, wie in FIG 1 gezeigt, daß die zwei Kämme um eine halbe Mikrospaltenteilung gegeneinander in Zeilenrichtung versetzt sind. Der Abstand der Kämme 14, 26 in Bewegungsrichtung des Bildträgers soll dabei möglichst klein sein.

Vor dem Schreibkopf, und zwar vor die Kämme 14 bzw. 26 kann eine Lochmaske angeordnet werden, wobei ein Loch in der Lochmaske der Leuchtfläche eines LEDs zugeordnet ist. Da die einzelnen Löcher der Lochmaske im Durchmesser kleiner sind als die Leuchtflächen der LEDs, kann die wirksame Leuchtfläche der LEDs festgelegt werden. Auf diese Weise kann eine Verbesserung des Schriftbildes erreicht werden. Die Lochmaske ist in FIG 1 nicht gezeigt.

Da die Leuchtflächen 18 der LEDs stirnseitig angeordnet sind, kann der Bildträger sehr nahe an der Licht abstrahlenden Fläche des Schreibkopfes vorbeibewegt werden, so daß Lichtverluste kaum auftreten. Zusätzliche Linsen bzw. Glasfaseroptiken zwischen Schreibkopf und Bildträger sind damit nicht erforderlich.

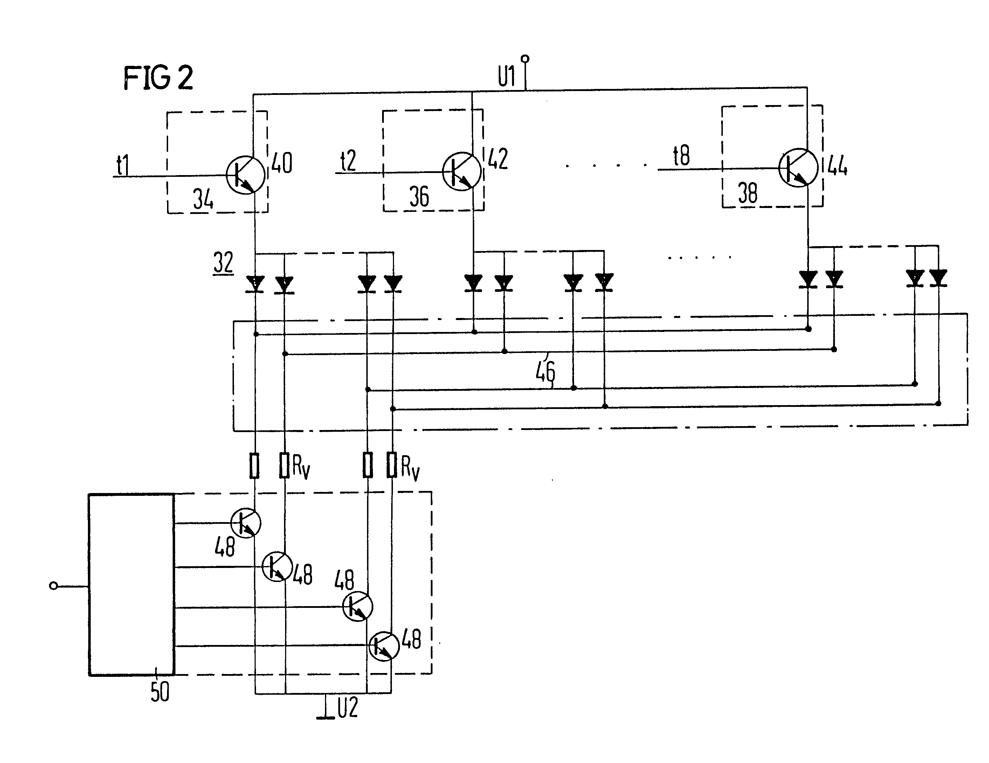

Um die Ansteuerung zu vereinfachen, kann eine Steuerschaltung gemäß FIG 2 verwendet werden. Hier ist der
LED-Kamm mit 32 bezeichnet. Die LEDs des Kammes sind
in Blöcke eingeteilt, z-B. in acht Blöcke, von denen
in FIG 2 drei Blöcke 34, 36 und 38 dargestellt sind.
Die Anoden der Leuchtdioden jeweils eines Blockes 34,
36, 38 sind miteinander verbunden und über je ein
Schaltelement 40, 42, 44 mit einer ersten Betriebsspannung U1 verbunden. Als Schaltelement kann z.B.
ein Transistor verwendet werden. Dem Schaltelement wird
ein Taktsignal t1, t2, t8 zugeführt.

Auf der Kathodenseite der LEDs sind die Kathoden entsprechender LEDs verschiedener Blöcke miteinander verbunden. Z.B. ist das erste LED des ersten Blockes mit
den ersten LEDs der übrigen Blöcke verbunden usw. Die
dadurch entstehenden Verknüpfungsleitungen 46 sind
in FIG 2 eingerahmt und bilden die Leitungen, die auf
der Unterseite des Polyamidfilmes 20 angeordnet sind.

Die jeweils über eine Verknüpfungsleitung miteinander
verbundenen Kathoden der LEDs führen über jeweils ein
zweites Schaltelement 48 zu einem zweiten Betriebspotential U2. Die Anzahl der zweiten Schaltelemente 48
entspricht dabei der Anzahl der LEDs pro Block. Die
Schaltelemente können auch hier als Transistoren ausgeführt sein. Zwischen Schaltelement 48 und LEDs kann
ein Vorwiderstand RV angeordnet sein.

Die Ansteuerung der zweiten Schaltelemente 48 erfolgt
über Treiberstufen 50, die in bekannter Weise z.B. von
einer Druckersteuerung angesteuert werden.

Über die ersten Schaltelemente 40, 42, 44 erfolgt die Ansteuerung eines Blockes von LEDs während über die zweiten Schaltelemente 48 ein LED in einem Block ausgewählt wird. Auf diese Weise kann jedes LED angesteuert werden, wobei die Ansteuerung der einzelnen Blöcke nacheinander erfolgt.

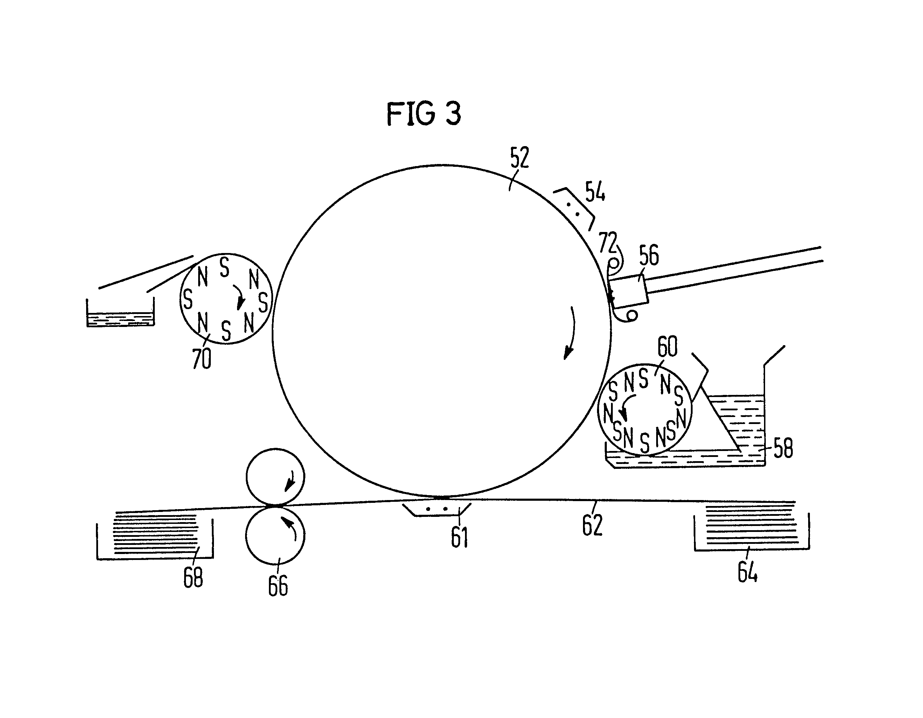

Die Anwendung eines Schreibkopfes mit LED-Kämmen zeigt das elektrofotografische Druckgerät nach FIG 3. Hier ist als Bildträger eine Fotoleitertrommel 52 vorgesehen. Entlang der Fotoleittrommel ist zunächst ein Ladekorotron 54 angeordnet, durch das die Oberfläche der Fotoleitertrommel 52 gleichmäßig aufgeladen wird. Anschließend folgt in Drehrichtung der Fotoleitertrommel 52 der Schreibkopf 56, dessen Ausführung oben beschrieben worden ist. Mit Hilfe des Schreibkopfes 56 werden entsprechend den zu erzeugenden Zeichen Bereiche der Oberfläche der Fotoleitertrommel 52 durch Belichtung entladen. Anschließend werden die Ladungsbilder in einer Entwicklerstation 58 eingefärbt. Die Entwicklerstation 58 kann z.B. eine Magnetbürste 60 bekannten Aufbaues enthalten. Auf der Oberfläche der Fotoleitertrommel 52 befinden sich nun Tonerbilder. Diese werden in eine Umdruckstation 61 vom Bildträger 52 auf das Bildempfangsmaterial 62, z.B. eine Papierbahn, übertragen. Dies kann auf bekannte Weise z.B. mit einem Korotron erfolgen. Das Bildempfangsmaterial 62 kommt aus einem Vorratsbehälter 64 und wird nach der Umdruckstation 61 zu einer Fixierstation 66 transportiert. Hier werden die Tonerbilder fest mit dem Bildempfangsmaterial 62 verbunden, z.B. mit Hilfe von Druckwalzen. Anschließend wird das Bildempfangsmaterial in einer Ablage 68 gestapelt. Hinter der Umdruckstation 60 ist entlang der Fotoleitertrommel 52 noch eine Reinigungswalze 70 angeordnet, durch die Reste von Toner bzw. Entwickler von der Oberfläche der Fotoleitertrommel 52 entfernt werden.

Um eine Verschmutzung der Leuchtdioden im Schreibkopf
56 z.B. durch Resttoner zu vermeiden, ist es zweckmässig, zwischen der Fotoleitertrommel 52 und dem Schreibkopf 56 ein Band aus transparenter Kunststoff-Folie 72
vorbeizuführen. Dabei kann die Kunststoff-Folie 72 von
einer Vorratsrolle zu einer Aufnahmerolle transportiert
werden und damit Bereiche der Kunststoff-Folie, die
bereits verschmutzt sind, vom Schreibkopf 56 entfernt
werden. Es ist aber auch möglich, vor den Schreibkopf 56
eine auswechselbare transparente Folie anzuordnen. Diese
tritt dann anstelle des Folienbandes 72. Wird als Bildträger 52 bereits ein mit einer Fotoleiterschicht versehene Papierbahn verwendet, dann kann der Schreibkopf
56 direkt auf dem Bildempfangsmaterial schleifen. Dies
hat den Vorteil, daß die Leuchtoberflächen der LEDs
permanent von Staub gereinigt werden.

10 Patentansprüche
 3 Figuren

Patentansprüche

1. Vorrichtung zur Erzeugung von Ladungsbildern auf einem fotoleitenden Bildträger mit Hilfe eines Licht aussendenden Schreibkopfes, bei der der Bildträger zuvor gleichmäßig aufgeladen worden ist und bei der die Ladungsbilder mit Hilfe von Toner entwickelt werden und die dadurch entstehenden Tonerbilder direkt auf dem Bildträger oder nach Umdruck auf ein Bildempfangs- material fixiert werden, d a d u r c h   g e k e n n - z e i c h n e t , daß der Schreibkopf (56) aus mindestens einem LED-Kamm (14, 26) besteht, der in Richtung der auf dem Bildträger (52) aufzubringenden Zeilen von Ladungsbildern angeordnet ist und eine Breite hat, die der Schreibbreite auf dem Bildträger (52) entspricht, daß zwischen Schreibkopf (56) und Bildträger (52) keine die von dem Schreibkopf ausgehenden Lichtstrahlen beeinflussenden oder führenden optischen Mittel angeordnet sind, und daß eine Steuerschaltung vorgesehen ist, die die LEDs entsprechend der zu schreibenden Zeichen ansteuert.

2. Vorrichtung nach Anspruch 1, d a d u r c h   g e - k e n n z e i c h n e t , daß der Schreibkopf (56) aus in Zeilenrichtung der Ladungsbilder auf dem Bildträger nebeneinander liegenden LEDs (16) besteht, die in der Anzahl der Anzahl der Mikrospalten entlang einer Druckzeile entsprechen.

3. Vorrichtung nach Anspruch 1 oder 2, d a d u r c h   g e k e n n z e i c h n e t , daß der Schreibkopf (56) aus mehreren in Zeilenrichtung angeordneten LED-Kämmen (14) besteht.

4. Vorrichtung nach Anspruch 1 oder 2, d a d u r c h
g e k e n n z e i c h n e t , daß der Schreibkopf (56)
aus mehreren LED-Kämmen (14, 26) mit größerer Teilung
besteht, und daß die Kämme in Bewegungsrichtung des Bildträgers (52) hintereinander, in Zeilenrichtung der Ladungsbilder auf dem Bildträger um Bruchteile der Teilung
versetzt zueinander angeordnet sind.

5. Vorrichtung nach einem der vorhergehenden Ansprüche,
d a d u r c h   g e k e n n z e i c h n e t , daß der
Schreibkopf (56) an der Lichtaustrittstelle (18) mit
einer Lochmaske versehen ist, durch die die Größe der
für die Entladung wirksamen Leuchtfläche pro LED festllegbar ist.

6. Vorrichtung nach einem der vorhergehenden Ansprüche,
d a d u r c h   g e k e n n z e i c h n e t , daß der
Schreibkopf (56) Montageträger (10, 12) enthält, auf
denen die LED-Kämme (14, 26) angeordnet sind, daß hinter den LED-Kämmen (14, 26) auf den Montageträgern
(12, 10) ein Polyamidfilm (20) angeordnet ist, auf dessen einer Seite die Zuleitungen (22) zu den LEDs (16)
und auf dessen anderer Seite Verknüpfungsleitungen für
die Zuleitungen liegen.

7. Vorrichtung nach einem der vorhergehenden Ansprüche,
d a d u r c h   g e k e n n z e i c h n e t , daß die
LEDs (32) in Blöcke (34, 36, 38) aufgeteilt sind, daß
die Anoden der LEDs jedes Blockes (34, 36, 38) über
ein erstes Schaltelement (40, 42, 44) mit einem ersten
Betriebspotential (U1) verbunden sind, und daß die
Kathode je eines LEDs pro Block mit der Kathode jeweils
eines entsprechenden LEDs in den anderen Blöcken verbunden ist und über ein zweites Schaltelement (48) mit
einem zweiten Betriebspotential (U2) verbunden sind.

8. Vorrichtung nach einem der vorhergehenden Ansprüche, d a d u r c h   g e k e n n z e i c h n e t , daß am Schreibkopf (56) vor der Lichtaustrittstelle (18) der LEDs (16) eine auswechselbare transparente Folie angeordnet ist.

9. Vorrichtung nach einem der Ansprüche 1 bis 7, d a - d u r c h   g e k e n n z e i c h n e t , daß ein Band aus transparenter Folie (72) zwischen Bildträger (52) und Schreibkopf (56) angeordnet ist, das am Schreibkopf vorbeibewegbar ist.

10. Vorrichtung nach einem der vorhergehenden Ansprüche, d a d u r c h   g e k e n n z e i c h n e t , daß als Bildempfangsmaterial ein elektrofotografisches Papier verwendet wird und daß der Schreibkopf (56) direkt auf dem Papier schleift.

FIG 1

0026452

FIG 2

2/3

0026452

# FIG 3